# EUROPEAN PATENT APPLICATION

(11) **EP 4 641 723 A1**
(43) Date of publication of application: **29.10.2025**
(21) Application number: 25168537.6
(22) Date of filing: 04.04.2025
(51) Int. Cl.: H01M 10/04, H01M 10/0587, H01M 50/107, H01M 4/36, H01M 10/0563

(54) **CYLINDRICAL SECONDARY BATTERY**

(30) Priority: 08.04.2024 KR 20240047102
(71) Applicant: SAMSUNG SDI CO., LTD., Yongin-si, Gyeonggi-do 17084 (KR)
(72) Inventor: JUNG, HYUN KI, 17084 Yongin-si, Gyeonggi-do (KR); KIM, MYUNG SEOB, 17084 Yongin-si, Gyeonggi-do (KR); YU, GWAN HYEON, 17084 Yongin-si, Gyeonggi-do (KR); YOO, YOON SUN, 17084 Yongin-si, Gyeonggi-do (KR); JUN, WOO TAE, 17084 Yongin-si, Gyeonggi-do (KR); PARK, GUN GUE, 17084 Yongin-si, Gyeonggi-do (KR); KO, SUNG GWI, 17084 Yongin-si, Gyeonggi-do (KR); KIM, MUN SUNG, 17084 Yongin-si, Gyeonggi-do (KR); PARK, JUNG HYUN, 17084 Yongin-si, Gyeonggi-do (KR); KIM, JUNG HYUN, 17084 Yongin-si, Gyeonggi-do (KR); KANG, MIN JUNG, 17084 Yongin-si, Gyeonggi-do (KR)
(74) Representative: Gulde & Partner

(57) **Abstract**

A cylindrical secondary battery (1) includes: a cylindrically wound electrode assembly (200) including a plurality of positive electrode plates (220, 220a, 220b), a plurality of negative electrode plates (230, 230a, 230b), and a plurality of separators (240a, 240b, 250, 250a, 250b) insulating the positive electrode plates (220, 220a, 220b) and the negative electrode plates (230, 230a, 230b) from each other; a can (100) accommodating the electrode assembly (200); and a cap plate (600) coupled to an open end of the can (100) and sealing the can (100).

## Description

### BACKGROUND

### 1. Field

Aspects of embodiments of the present disclosure relate to a cylindrical secondary battery.

### 2. Description of the Related Art

Generally, a cylindrical secondary battery may include a cylindrical electrode assembly, a cylindrical can configured to receive (or accommodate) the electrode assembly and an electrolytic solution, and a cap assembly coupled to the can to seal the can. The electrode assembly may be configured such that a negative electrode plate, a positive electrode plate, and a separator interposed therebetween are wound in the form of a column.

Conventionally, a single stack including a negative electrode plate, a positive electrode plate, and a separator may be wound to form an electrode assembly. For a large-diameter electrode assembly, however, the length of each electrode plate may be very large. For example, an electrode plate having a length in a range of 2.5 m to 12 m may be required for a large-diameter electrode assembly having a diameter of 32 φ (pi). This may lead to increased winding time and reduced productivity. Thus, it may be desirable to be able to produce high capacity batteries in a shorter time.
The information disclosed in this section is provided for enhancement of understanding of the background of the present disclosure, and therefore, it may include information that does not form prior art.

### SUMMARY

Embodiments of the present disclosure provide a cylindrical secondary battery in which a plurality of positive electrode plates, a plurality of negative electrode plates and a plurality of separators are wound to form an electrode assembly.

In particular, a cylindrical secondary battery, according to an embodiment of the present disclosure, includes a cylindrically wound electrode assembly including a plurality of positive electrode plates, a plurality of negative electrode plates, and a plurality of separators insulating the positive electrode plates and the negative electrode plates from each other, a can accommodating the electrode assembly, and a cap plate coupled to an open end of the can and sealing the can. Thus, as a plurality of positive electrode plates, a plurality of negative electrode plates and a plurality of separators are simultaneously would, winding the electrode assembly to reach a desired capacity is faster.

The electrode assembly may be wound by stacking a plurality of stacks. Hence, the electrode assembly may comprise a plurality of stacks, each of which being stacked and then wound. An advantageous of this embodiment may be that the plurality of stacks reaches a desired diameter, i.e. a desired capacity, during winding compared to winding a positive electrode plate, a negative electrode plate and a separator.

Each of the stacks may include one positive electrode plate, one negative electrode plate, one first separator between the one positive electrode plate and the one negative electrode plate, and one second separator outside the one positive electrode plate or the one negative electrode plate. That the second separator is arranged outside may mean that it is farther away from a winding axis than the positive and negative electrode plates and the other separator, e.g. for at least one winding. An advantageous of this embodiment may be that multiple stacks can be stacked without the need of adding the second separator between the stacks while winding the stacks.

The plurality of positive electrode plates may be coated with the same positive electrode active material. Hence, the positive electrode plates of the plurality of positive electrode plates may respectively be coated with the same positive electrode active material. An advantageous of this embodiment may be that charge and discharge characteristics can be kept the same between the stacks.

The plurality of positive electrode plates may be coated with different positive electrode active materials. Hence, the positive electrode plates of the plurality of positive electrode plates may respectively be coated with different positive electrode active materials. An advantageous of this embodiment may be that charge and discharge characteristics can be adapted, e.g. to different winding radii of different positive electrode plates.

The plurality of negative electrode plates may be coated with the same negative electrode active material. Hence, the negative electrode plates of the plurality of negative electrode plates may respectively be coated with the same negative electrode active material. An advantageous of this embodiment may be that charge and discharge characteristics can be kept the same between the stacks.

The plurality of negative electrode plates may be coated with different negative electrode active materials. Hence, the negative electrode plates of the plurality of negative electrode plates may respectively be coated with different negative electrode active materials. An advantageous of this embodiment may be that charge and discharge characteristics can be adapted, e.g. to different winding radii of different negative electrode plates.

The plurality of positive electrode plates may have the same thickness. Hence, the positive electrode plates of the plurality of positive electrode plates may respectively have the same thickness. An advantageous of this embodiment may be that charge and discharge characteristics can be kept the same between the stacks.

The plurality of positive electrode plates may have different thicknesses. Hence, the positive electrode plates of the plurality of positive electrode plates may respectively have different thicknesses. An advantageous of this embodiment may be that charge and discharge characteristics can be adapted, e.g. to different winding radii of different negative electrode plates.

The plurality of negative electrode plates may have the same thickness. Hence, the negative electrode plates of the plurality of negative electrode plates may respectively have the same thickness. An advantageous of this embodiment may be that charge and discharge characteristics can be kept the same between the stacks.

The plurality of negative electrode plates may have different thicknesses. Hence, the negative electrode plates of the plurality of negative electrode plates may respectively have different thicknesses. An advantageous of this embodiment may be that charge and discharge characteristics can be adapted, e.g. to different winding radii of different negative electrode plates.

The outermost side of the wound electrode assembly may be one of the separators. An advantageous of this embodiment may be that no separate insulation for insulating the can from the electrode assembly at least at a lateral side or lateral surface of the electrode assembly. The lateral side or lateral surface may extend around the winding axis and/or may face away from the winding axis.

The outermost side of the wound electrode assembly may be the positive electrode plate or the negative electrode plate. An advantageous of this embodiment may be that capacity of the battery may be increased, for example in case the case is non-conductive and/or an inner side of the can that faces the lateral side or lateral surface of the electrode assembly is equipped with an insulator, e.g. an insulation layer.

The cylindrical secondary battery may further include a rivet terminal electrically connected to the plurality of positive electrode plates. The rivet terminal may be insulated from the can. The can may be electrically connected to the plurality of negative electrode plates, and the cap plate may be insulated from the can. An advantageous of this embodiment may be that the battery provides well defined contacts for charging and discharging.

The can may have a circular upper surface portion and a side surface portion extending from the upper surface portion. An inwardly recessed beading portion may be adjacent to an end of the side surface portion. An advantageous of this embodiment may be that the stability of the can is improved.

The cylindrical secondary battery may further include a negative electrode current collector plate in contact with the beading portion and electrically connected to the plurality of negative electrode plates. The cylindrical secondary battery may further include a positive electrode current collector plate electrically connected to the plurality of positive electrode plates and the rivet terminal. An advantageous of this embodiment may be that the electrodes of the stacks can be easily connected by the respective current collector in a compact manner.

The positive electrode plates and/or the negative electrode plates may each comprise electrode substrate tabs on a longitudinal side thereof. The distance between the electrode substrate tabs and/or the size of the electrode substrate tabs may change or decrease or monotonically decrease or strictly monotonically decrease along the longitudinal side. An advantageous of this embodiment may be that the electrode substrate tabs may be correctly positioned after winding the stacks.

The positive electrode plates and/or the negative electrode plates may each comprise a non-coated portion forming tabs on a longitudinal side of the respective electrode plate. The distance between tabs and/or the size of tabs may change or decrease or monotonically decrease or strictly monotonically decrease along the longitudinal side. An advantageous of this embodiment may be that the tabs may be correctly positioned after winding the stacks.

The positive electrode plates and/or the negative electrode plates may each comprise electrode tabs on a longitudinal side thereof. The length of the electrode tabs may change or decrease or monotonically decrease or strictly monotonically decrease along the longitudinal side. An advantageous of this embodiment may be that the lengths of the electrode tabs may facilitate connection of the electrode tabs, e.g. to a current collector. For example, after winding, electrode tabs further away from a winding axis may be longer than electrode tabs closer to the winding axis, such that the electrode tabs can be join at the winding axis.

The longitudinal sides of the positive electrode plates and/or the negative electrode plates may extend parallel to the winding axis and may face towards or away from the upper surface portion or the cap plate of the battery.

### BRIEF DESCRIPTION OF THE DRAWINGS

FIG. 1 is a perspective view of a cylindrical secondary battery according to an embodiment of the present disclosure;
FIG. 2 is a vertical cross-sectional view of the cylindrical secondary battery shown in FIG. 1;
FIG. 3 is a horizontal cross-sectional view of an electrode assembly shown in FIG. 2;
FIG. 4 is a perspective view showing the electrode assembly shown in FIG. 3 before winding;
FIG. 5A is a plan view of one positive electrode plate and one negative electrode plate separated from the electrode assembly shown in FIG. 4;
FIGS. 5B to 5F are plan views of the positive electrode plate or the negative electrode plate according to various embodiments;
FIG. 6 is an enlarged cross-sectional view showing the part A of FIG. 2; and
FIG. 7 is a bottom perspective view of a negative electrode current collector plate coupled to a bottom of a cylindrical can.

### DETAILED DESCRIPTION

Embodiments are described below to more fully explain aspects and features of the present disclosure to a person having ordinary skill in the art. The following embodiments may be modified in various other forms, and the scope of the present disclosure is not limited to the following embodiments. The embodiments are provided to make the present disclosure more complete and to completely convey the idea of the present disclosure fully to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Hereinafter, a cylindrical secondary battery according to embodiments of the present disclosure will be described, in detail, with reference to the accompanying drawings.

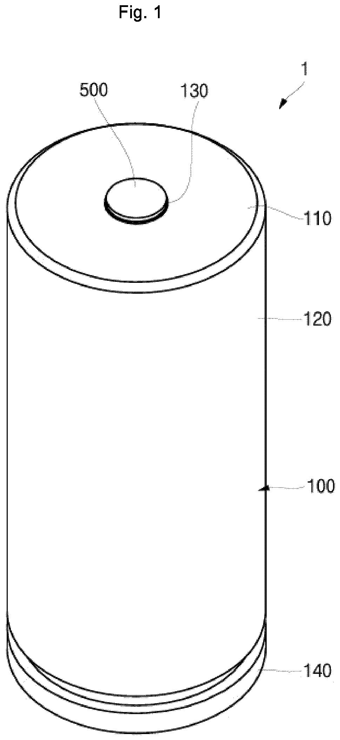

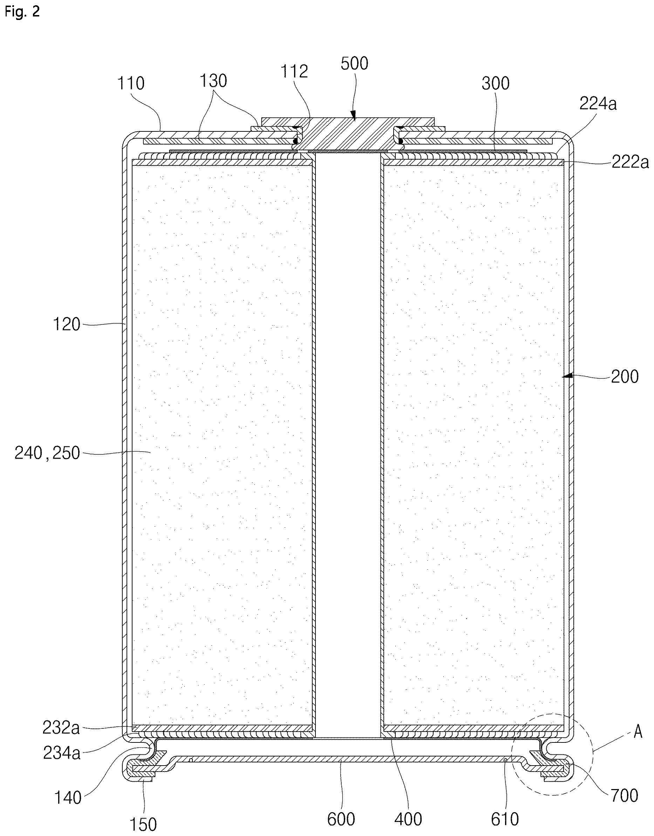

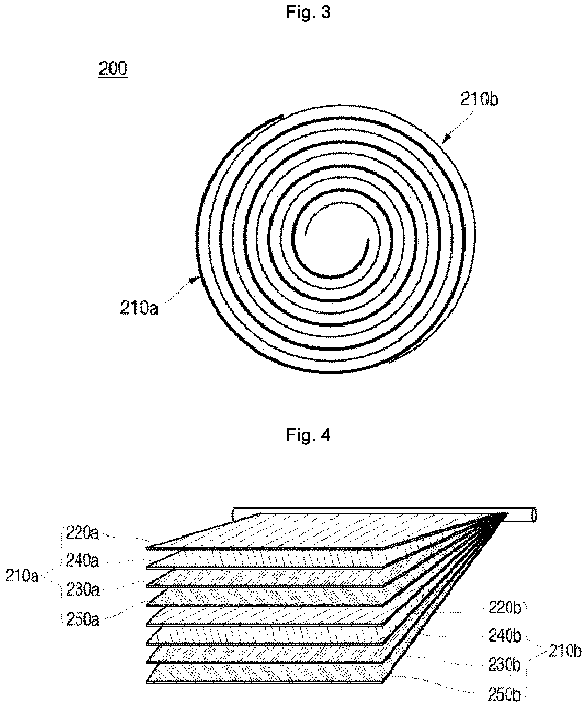

FIG. 1 is a perspective view of a cylindrical secondary battery according to an embodiment of the present disclosure. FIG. 2 is a vertical cross-sectional view of the cylindrical secondary battery shown in FIG. 1. FIG. 3 is a horizontal cross-sectional view of an electrode assembly shown in FIG. 2. FIG. 4 is a perspective view of the electrode assembly shown in FIG. 3 before winding.

Referring to FIGS. 1 and 2, the cylindrical secondary battery 1 according to an embodiment of the present disclosure may include a can 100, an electrode assembly 200 received in the can 100, a rivet terminal 500 coupled to one end of the can 100, and a cap plate 600 configured to seal the other end of the can 100. The cylindrical secondary battery 1 may further include a positive electrode current collector plate 300 configured to electrically connect the electrode assembly 200 and the rivet terminal 500 to each other and a negative electrode current collector plate 400 configured to electrically connect the electrode assembly 200 and the can 100 to each other.

Referring to FIGS. 1 and 2, the can 100 may have a cylindrical shape and may have a circular upper surface portion 110 and a side surface portion 120 extending downwardly by a length (e.g., a predetermined length) from an edge of the upper surface portion 110. The upper surface portion 110 and the side surface portion 120 of the can 100 may be integrally formed.

The upper surface portion 110 may have a flat circular shape and may have a terminal hole (e.g., a terminal opening) 112 formed through the center thereof. The rivet terminal 500 may be inserted into and coupled to the terminal hole 112. A first gasket 130 for sealing and electrical insulation may be interposed between the terminal hole 112 and the rivet terminal 500.

The first gasket 130 may block contact between the rivet terminal 500 and the can 100 and between the positive electrode current collector plate 300 and the upper surface portion 110 of the can 100 to electrically isolate the rivet terminal 500 and the can 100 from each other and to electrically isolate the positive electrode current collector plate 300 and the upper surface portion of the can 100 from each other. The terminal hole 112 in the upper surface portion 110 of the can 100 may be sealed by the first gasket 130. The first gasket 130 may be made of a resin material, such as polyethylene (PE), polypropylene (PP), or polyethylene terephthalate (PET). The first gasket 130 may be provided in one or plural. In some embodiments, the first gasket 130 may insulate the rivet terminal 500 and the can 100 from each other, and a separate insulating member may be disposed between the positive electrode current collector plate 300 and the upper surface portion 110 of the can 100. In some embodiments, an insulating film may be attached to an upper surface of the positive electrode current collector plate 300.

During the manufacturing process of the cylindrical secondary battery 1, the bottom of the can 100 may be open. During the manufacturing process of the cylindrical secondary battery 1, therefore, the electrode assembly 200 may be inserted into the can 100 through the open bottom of the can along with an electrolytic solution. The electrolytic solution and the electrode assembly 200 may be inserted into the can 100 in the state in which the open bottom of the can faces upwardly (e.g., upwardly in a gravitational direction). After the electrolytic solution and the electrode assembly 200 are inserted into the can 100, the cap plate 600 may be coupled to a lower end of the can to seal the interior of the can 100. The electrolytic solution may allow lithium ions to move between a positive electrode plate 220 and a negative electrode plate 230 of the electrode assembly 200. The electrolytic solution may be a non-aqueous organic electrolytic solution, which is a mixture of a lithium salt and a high-purity organic solvent. The electrolytic solution may be a polymer using a polyelectrolyte or a solid electrolyte; however, the present disclosure is not limited thereto.

The can 100 may be made of steel, a steel alloy, aluminum, an aluminum alloy, or an equivalent thereto; however, the present disclosure is not limited thereto. The can 100 may include or may be referred to as a case, a housing, or an exterior material. The can 100 may have a beading portion (e.g., a bead) 140 and a crimping portion (e.g., a crimp) 150 to prevent separation of the electrode assembly 200 to the outside at the side surface portion 120 thereof. The beading portion 140 is formed adjacent to an end of the side surface portion 120 and is inwardly recessed above the cap plate 600. The crimping portion 150 may be formed by the end of the side surface portion 120 adjacent to the beading portion 140 being bent inwardly.

After the electrode assembly 200 is inserted into the can 100 through the open bottom of the can 100, the beading portion 140 may be formed in the can 100 to prevent the electrode assembly 200 from being separated from the can 100. An edge of a bottom of the electrode assembly 200 may be seated on the beading portion 140, for example, the top of the beading portion 140.

Referring to FIGS. 2 to 4, according to embodiments of the present disclosure, the electrode assembly 200 may include a plurality of positive electrode plates 220, a plurality of negative electrode plates 230, and a plurality of separators 240 and 250 configured to insulate the plurality of positive electrode plates 220 and the plurality of negative electrode plates 230 from each other. The electrode assembly 200 may be cylindrically wound.

The electrode assembly 200 may be formed as the result of a plurality of stacks 210 being stacked and wound, as shown in FIGS. 3 and 4. An electrode assembly 200 formed as the result of two stacks 210a and 210b being wound will be described by way of example, but the present disclosure is not limited thereto. For example, the electrode assembly may comprise more than two stacks, e.g. three stacks, four stacks, five stacks, six stacks, seven stacks, eight stacks, nine stacks, 10 stacks or even more stacks. These at least two or more stacks may be wound jointly and/or mutually and/or at the same time and/or simultaneously. Each stack 210a or 210b may include one positive electrode plate 220a or 220b, one negative electrode plate 230a or 230b, one first separator 240a or 240b disposed between the one positive electrode plate 220a or 220b and the one negative electrode plate 230a or 230b, and optionally one second separator 250a or 250b disposed outside the one positive electrode plate 220a or 220b or the one negative electrode plate 230a or 230b. The stacks 210a and 210b may each have the same structure.

The second separator 250a or 250b may be disposed outside the negative electrode plates 230a or 230b. As a result, when the two stacks 210a and 210b are stacked, the positive electrode plate 220a, the first separator 240a, the negative electrode plate 230a, and the second separator 250a are stacked, and then the positive electrode plate 220b, the first separator 240b, the negative electrode plate 230b, and the second separator 250b are stacked, as shown in FIG. 4.

The two stacks 210a and 210b may then be wound into a cylindrical shape, as shown in FIG. 3. The two stacked stacks 210a and 210b may be wound counterclockwise such that the second separator 250 is disposed at the outermost side of the wound electrode assembly 200. However, the present disclosure is not limited thereto, and the two stacked stacks 210a and 210b may be wound clockwise such that the positive electrode plate 220 is disposed at the outermost side of the wound electrode assembly 200.

In other embodiments, if the second separator 250a or 250b is disposed outside the positive electrode plate 220a or 220b, the negative electrode plate 230 may be disposed at the outermost side of the wound electrode assembly 200. If the outside of the electrode assembly 200 is insulated, the positive electrode plate 220a or 220b may be disposed at the outermost side of the wound electrode assembly 200.

If a plurality of stacks is wound to form an electrode assembly, as described above, the length of each electrode plate in a large-diameter electrode assembly may be reduced, and the winding speed (e.g., winding machine index; the number of electrode assemblies wound per minute) may be increased and/or the number of revolutions may be increased. As a result, necessary winding equipment, labor, and space may be reduced and productivity may be increased. As the length of each electrode plate increases, the time for the electrolytic solution to permeate between the wound electrode plates may increase and impregnation may be lowered. According to embodiments of the present disclosure, however, the length of each electrode plate to be wound may be reduced, thereby improving electrolyte impregnation.

For example, if one stack is wound to form a large-diameter electrode assembly of 55 φ (pi), a positive electrode plate and a negative electrode plate each having a length of about 6800 mm is required. This may increase the time necessary to wind a single electrode assembly, reducing the winding machine index, that is, the number of electrode assemblies formed per minute, and reducing productivity. To maintain productivity, the number of winding facilities may be increased, which requires more labor and space.

If two stacks are wound, however, two positive electrode plates and two negative electrode plates each having a length of 3400 mm may be used. As a result, the winding machine index may not be significantly reduced and productivity may be maintained. Three or more stacks may be stacked and wound to avoid an increase in the length of each electrode plate.

The positive electrode plate 220 may be formed by applying a positive electrode active material, such as a transition metal oxide, to a positive electrode current collector made of metal foil, such as aluminum or an aluminum alloy. In some embodiments, a compound capable of reversibly intercalating and deintercalating lithium (e.g., a lithiated intercalation compound) may be used as the positive electrode active material. A complex oxide with a metal selected from among cobalt, manganese, nickel, and a combination thereof and lithium may be used.

The complex oxide may be a lithium transition metal complex oxide, and examples thereof include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following chemical formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof, X is Al, Ni, Co, Mn, Cr, Fe, Mg, Sr, V, a rare earth element, or a combination thereof, D is O, F, S, P, or a combination thereof, G is Al, Cr, Mn, Fe, Mg, La, Ce, Sr, V, or a combination thereof, and L1 is Mn, Al, or a combination thereof.

A positive electrode for lithium secondary batteries may include a current collector (e.g., a first substrate) and a positive electrode active material layer formed on the current collector. The positive electrode active material layer may include a positive electrode active material and may further include a binder and/or a conductive agent.

The content of the positive electrode active material may be in a range of about 90 wt% to about 99.5 wt%, e.g. 90 wt%, 91 wt%, 92 wt%, 93 wt%, 94 wt%, 95 wt%, 96 wt%, 97 wt%, 98 wt%, 99 wt% or 99.5 wt%, based on 100 wt% of the positive electrode active material layer, the content of the binder may be in a range of about 0.5 wt% to about 5 wt%, e.g. 0,5 wt%, 1 wt%, 2 wt%, 3 wt%, 4 wt% or 5 wt%, based on 100 wt% of the positive electrode active material layer, and the content of the conductive agent may be in a range of about 0.5 wt% to about 5 wt%%, e.g. 0,5 wt%, 1 wt%, 2 wt%, 3 wt%, 4 wt% or 5 wt%, based on 100 wt% of the positive electrode active material layer.

In the illustrated embodiment, two positive electrode plates 220a and 220b may be provided, and the two positive electrode plates 220a and 220b may be coated with the same positive electrode active material. However, the present disclosure is not limited thereto, and the two positive electrode plates 220a and 220b may be coated with different positive electrode active materials.

In FIG. 4, the two positive electrode plates 220a and 220b are shown as having the same thickness. However, the present disclosure is not limited thereto, and the two positive electrode plates 220a and 220b may have different thicknesses. The positive electrode plate 220a in one stack 210a may be thicker, and the positive electrode plate 220b in the other stack 210b may be thinner for higher output.

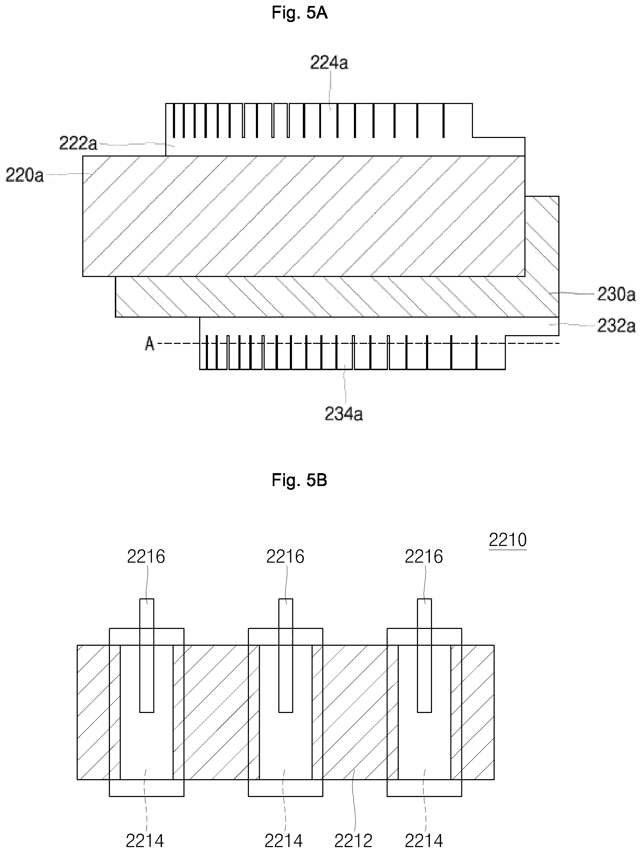

In FIG. 5A, one positive electrode plate 220a and one negative electrode plate 230a are shown separately. However, the following description is identically applied to the other positive electrode plate 220b and the other negative electrode plate 230b.

Referring to FIG. 5A, the positive electrode plate 220a may be provided at (e.g., relatively at) an upper end thereof with a positive electrode non-coated portion 222a, which is a region at where no positive electrode active material is applied. Upon stacking of the electrode assembly 200, the positive electrode non-coated portion 222a may protrude farther upwardly than the negative electrode plate 230a and the separators 240a and 250a (e.g., in a direction toward an upper part of the electrode assembly after winding of the electrode assembly). In the manufacturing process, a plurality of positive electrode substrate tabs 224a may be formed by cutting the positive electrode non-coated portion 222a (e.g., cutting by using a press or laser notching). The positive electrode substrate tabs 224a may be folded to or arranged at an angle, e.g. by pre-folding prior to winding of the electrode assembly 200 (see, e.g., FIG. 2). The positive electrode substrate tabs 224a may then be electrically connected to the positive electrode current collector plate 300, which will be described in more detail later.

The plurality of positive electrode substrate tabs 224a may be aligned to be easily welded to the positive electrode current collector plate 300. According to embodiments of the present disclosure, a plurality of stacks may be wound, and therefore, it may be useful to ensure that the plurality of positive electrode substrate tabs 224a may be easily aligned after winding. Therefore, the position of the positive electrode substrate tabs 224a may be easily adjusted by pushing or pulling the positive electrode plate 220a of each stack before winding the plurality of stacks.

The negative electrode plate 230 may be formed by applying a negative electrode active material, such as graphite or carbon, to a negative electrode current collector made of metal foil, such as copper, a copper alloy, nickel, or a nickel alloy. The negative electrode active material may include a material capable of reversibly intercalating/deintercalating lithium ions, lithium metal, a lithium metal alloy, a material capable of being doped and de-doped with lithium, or a transition metal oxide.

The material capable of reversibly intercalating/de-intercalating lithium ions may be a carbon-based negative electrode active material, which may include, for example, crystalline carbon, amorphous carbon, or a combination thereof. Examples of crystalline carbon may include graphite, such as natural graphite or artificial graphite, and examples of amorphous carbon may include soft carbon, hard carbon, mesophase pitch carbide, or calcined coke.

A Si-based negative electrode active material or a Sn-based negative electrode active material may be used as the material capable of being doped and de-doped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to an embodiment, the silicon-carbon composite may be in the form of silicon particles and amorphous carbon coated on surfaces of the silicon particles.

The silicon-carbon composite may further include crystalline carbon. For example, the silicon-carbon composite may include a core including crystalline carbon and silicon particles and an amorphous carbon coating layer located on the surface of the core.

A negative electrode for lithium secondary batteries may include a current collector (e.g., a second substrate) and a negative electrode active material layer formed on the current collector. The negative electrode active material layer may include a negative electrode active material and may further include a binder and/or a conductive agent.

For example, the negative electrode active material layer may include about 90 wt% to about 99 wt%, e.g. 90 wt%, 91 wt%, 92 wt%, 93 wt%, 94 wt%, 95 wt%, 96 wt%, 97 wt%, 98 wt%, 99 wt% or 99.5 wt%, of a negative electrode active material, about 0.5 wt% to about 5 wt%, e.g. 0,5 wt%, 1 wt%, 2 wt%, 3 wt%, 4 wt% or 5 wt%, of a binder, and about 0 wt% to about 5 wt%, e.g. 0,5 wt%, 1 wt%, 2 wt%, 3 wt%, 4 wt% or 5 wt%, of a conductive agent.

A non-aqueous binder, an aqueous binder, a dry binder, or a combination thereof may be used as the binder. When an aqueous binder is used as the negative electrode binder, a cellulose-based compound capable of imparting viscosity may be further included.

Any one selected from among copper foil, nickel foil, stainless steel foil, titanium foil, nickel foam, copper foam, a polymer substrate coated with a conductive metal, and a combination thereof may be used as the current collector.

In the illustrated embodiment, two negative electrode plates 230a and 230b may be provided, and the two negative electrode plates 230a and 230b may be coated with the same negative electrode active material. However, the present disclosure is not limited thereto, and the two negative electrode plates 230a and 230b may be coated with different negative electrode active materials.

In FIG. 4, the two negative electrode plates 230a and 230b are shown as having the same thickness. However, the present disclosure is not limited thereto, and the two negative electrode plates 230a and 230b may have different thicknesses. The negative electrode plate 230a of one stack 210a may be thicker, and the negative electrode plate 230b of the other stack 210b may be thinner for higher output.

Referring to FIG. 5A, the negative electrode plate 230a may be provided at (e.g., relatively at) a lower end thereof with a negative electrode non-coated portion 232a, which is a region at where no negative electrode active material is applied. Upon stacking of the electrode assembly 200, the negative electrode non-coated portion 232a may protrude farther downwardly than the positive electrode plate 220a and the separators 240a and 250a (e.g., in a direction toward a lower part of the electrode assembly after winding of the electrode assembly). In the manufacturing process, a plurality of negative electrode substrate tabs 234a may be formed by cutting the negative electrode non-coated portion 232a. The negative electrode substrate tabs 234a may be folded to an angle by pre-folding prior to winding of the electrode assembly 200 (see, e.g., FIG. 2). The negative electrode substrate tabs 234a may then be electrically connected to the negative electrode current collector plate 400, which will be described in more detail later.

The plurality of negative electrode substrate tabs 234a may be aligned to be easily welded to the negative electrode current collector plate 400. According to embodiments of the present disclosure, a plurality of stacks may be wound, and therefore, it may be useful to ensure that the plurality of negative electrode substrate tabs 234a may be easily aligned after winding. Therefore, the position of the negative electrode substrate tabs 234a may be easily adjusted by pushing or pulling the negative electrode plate 230a of each stack before winding the plurality of stacks.

The separators 240 and 250 may prevent an electrical short circuit between the positive electrode plate 220 and the negative electrode plate 230 while allowing migration of lithium ions therebetween. The first separator 240a or 240b may prevent a short circuit between the positive electrode plate 220a or 220b and the negative electrode plate and 230a or 230b in one stack, and the second separator 250a or 250b may prevent a short circuit between the negative electrode plate 230a and the positive electrode plate 230b in different stacks adjacent to each other. Each of the separators 240 and 250 may be made of polyethylene (PE) or polypropylene (PP); however, the present disclosure is not limited thereto.

Each of the positive electrode plate and the negative electrode plate may have various shapes other than those described above. The following embodiments may be commonly applied to both the positive electrode plate and the negative electrode plate, and therefore each of the positive electrode plate and the negative electrode plate will be described as an "electrode plate" without distinguishing therebetween.

FIGS. 5B to 5F are plan views of the electrode plate, hence the positive electrode plate or the negative electrode plate, according to various embodiments.

As shown in FIG. 5B, an electrode plate 2210 may have an active material layer 2212 having an active material applied thereto and a non-coated portion 2214 having no active material applied thereto. A plurality of non-coated portions 2214 may be provided in a longitudinal direction of the electrode plate 2210. An electrode tab 2216 may be coupled to each non-coated portion 2214. The electrode tabs 2216 may have the same shape and size. The plurality of electrode tabs 2216 may be electrically connected to a current collector plate after winding or stacking of the electrode plate 2210. In other embodiments, a separate electrode lead may be electrically connected to the electrode tabs 2216 by welding. An insulating tape configured to cover the non-coated portion 2214 or at least a part or an end thereof may be attached to the non-coated portion 2214.

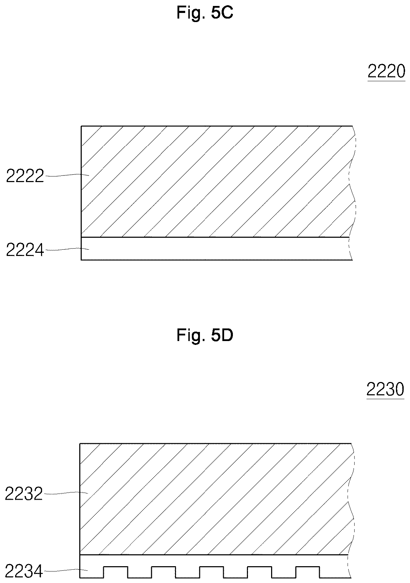

As shown in FIG. 5C, an electrode plate 2220 may have an active material layer 2222 having an active material applied thereto and a non-coated portion 2224 having no active material applied thereto. The active material layer 2222 and the non-coated portion 2224 may be continuously provided in a longitudinal direction of the electrode plate 2220. The non-coated portion 2224 may be provided without cutting. After winding of the electrode plate 2220, the non-coated portion 2224 may be compacted and welded to a current collector plate to be electrically connected to the current collector plate. In other embodiments, a separate electrode lead may be electrically connected to the non-coated portion 2224 by welding.

As shown in FIG. 5D, an electrode plate 2230 may have an active material layer 2232 and a non-coated portion 2234 continuously provided in a longitudinal direction thereof. The non-coated portion 2234 may be cut to have a shape (e.g., a predetermined shape). For example, the non-coated portion 2234 may be notched to provide substrate tabs acting as tabs. Although the cut shape of the non-coated portion 2234 shown in FIG. 5D is different from the cut shape of the non-coated portion shown in FIG. 5A, the non-coated portion shown in FIG. 5D is identical or substantially similar to the structure in which the non-coated portion is pre-folded and connected to a current collector plate to the non-coated portion shown in FIG. 5A.

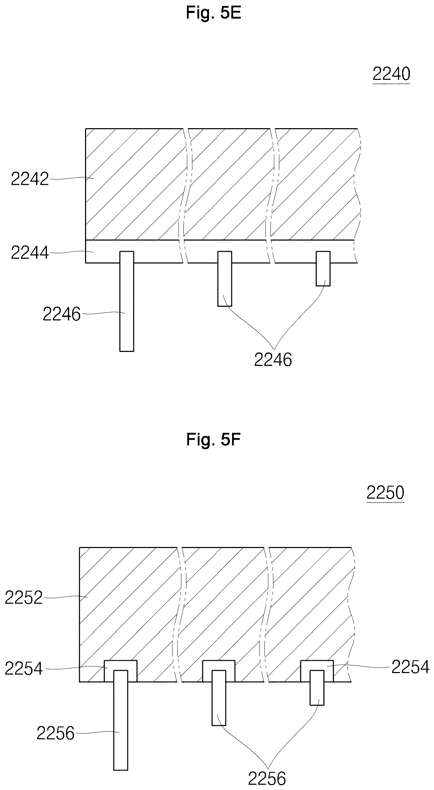

FIG. 5E shows a structure in which a plurality of electrode tabs 2246 is provided at an electrode plate 2240 having an active material layer 2242 and a non-coated portion 2244 of the same structure as the electrode plate shown in FIG. 5C. The electrode tabs 2246 may be sequentially disposed to have gradually increasing or gradually decreasing lengths. The lengths of the electrode tabs 2246 may be changed in consideration of the fact that the electrode tabs 2246 are gathered to one side, bent, and welded to a current collector plate or an electrode lead after winding or stacking of the electrode plate 2240. The electrode tab 2246 having the largest length may be bent the most (e.g., bent at the largest angle).

FIG. 5F shows an electrode plate 2250 having an active material layer 2252 and electrode tabs 2256 having the same structure as the electrode plate shown in FIG. 5E. However, a non-coated portion 2254 may not be continuously provided in a longitudinal direction of the electrode plate 2250 but may be provided only in some regions of the electrode plate in which the electrode tabs 2256 are disposed.

Referring back to FIG. 2, the positive electrode current collector plate 300 may be a circular metal plate having a shape corresponding to an upper surface of the electrode assembly 200. The planar size of the positive electrode current collector plate 300 may be equal to or less than the size of the upper surface of the electrode assembly 200. The positive electrode current collector plate 300 may be made of aluminum (Al). The positive electrode current collector plate 300 may be welded to the electrode assembly 200 in the state in which a lower surface of the positive electrode current collector plate is in contact with the upper surface of the electrode assembly 200. The positive electrode current collector plate 300 may be fixed and electrically connected to a plurality of positive electrode substrate tabs 224a of two upwardly exposed positive electrode plates 220a and 220b of the electrode assembly 200. The positive electrode current collector plate 300 may be fixed and electrically connected to the rivet terminal 500 by welding in the state in which an upper surface of the positive electrode current collector plate is in contact with a lower surface of the rivet terminal 500. The positive electrode current collector plate 300 may be a current flow path between the positive electrode plate 220 of the electrode assembly 200 and the rivet terminal 500.

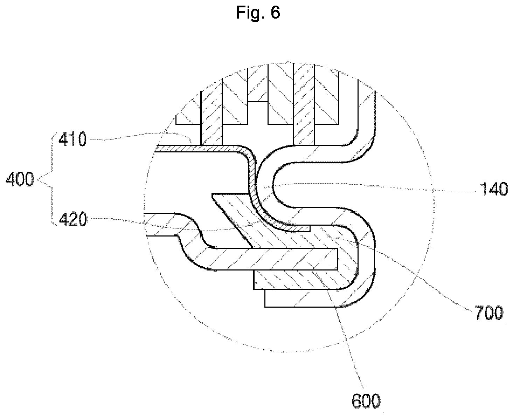

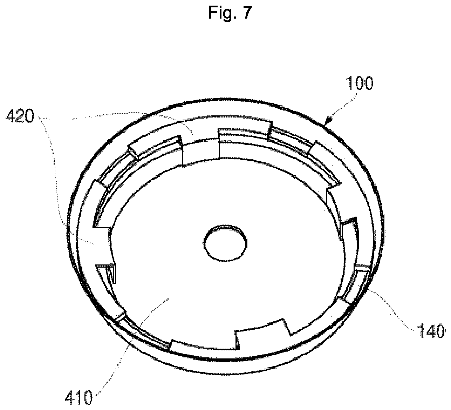

FIG. 6 is an enlarged sectional view of the part A of FIG. 2. FIG. 7 is a bottom perspective view of a negative electrode current collector plate coupled to a bottom of the cylindrical can.

Referring to FIG. 6, the negative electrode current collector plate 400 may have a circular flat portion 410 corresponding to the lower surface of the electrode assembly 200 and an extension portion 420 extending downwardly from an edge of the flat portion 410. An upper surface of the flat portion 410 may be in contact with the lower surface of the electrode assembly 200. The flat portion 410 may be welded to the electrode assembly 200 in the state in which the upper surface of the flat portion is in contact with the lower surface of the electrode assembly 200. The upper surface of the flat portion 410 may be fixed and electrically connected to a plurality of negative electrode substrate tabs 234a of two downwardly exposed negative electrode plates 230a and 230b of the electrode assembly 200.

A plurality of extension portions 420 may be provided along an edge of the flat portion 410 to be spaced apart from each other. FIG. 7 is a bottom perspective view of the negative electrode current collector plate 400 in a state in which it is seated on the beading portion 140 of the can 100 after the beading portion 140 is formed. In FIG. 7, four extension portions 420 are shown as being symmetrical to each other around the flat portion 410; however, the present disclosure is not limited thereto. The extension portion 420 may be bent downwardly and may extend from the edge of the flat portion 410. The extension portion 420 may be welded to a flat part of the bottom of the beading portion 140 in contact therewith. As a result, the extension portion 420 may be fixed and electrically connected to the can 100. Thus, the negative electrode current collector plate 400 may be or may provide a current flow path between the negative electrode plate 230 of the electrode assembly 200 and the can 100. The extension portion 420 and the beading portion 140 may be welded prior to formation of the crimping portion 150 of the can 100, as shown in FIG. 7.

The rivet terminal 500 may be inserted into the terminal hole 112 in the upper surface portion 110 of the can 100 and may be electrically connected to the positive electrode current collector plate 300. The rivet terminal 500 may be made of a material identical or similar to the material of each of the positive electrode current collector plate 300 and the positive electrode plate 220. The diameter of the part of the rivet terminal 500 exposed above the can 100 may be greater than the diameter of the part of the rivet terminal 500 located in the can 100. For convenience, the part of the rivet terminal 500 exposed above the can 100 will be referred to as an upper end of the rivet terminal 500, and the part of the rivet terminal 500 facing the electrode assembly 200 in the can 100 will be referred to as a lower end of the rivet terminal 500. The rivet terminal 500 may be coupled to the terminal hole 112 in the upper surface portion 110 of the can 100 from below in an upward direction. Subsequently, the upper end of the rivet terminal 500 may be compressed by using a method, such as pressing or spinning, and may be brought into tight contact with the upper surface portion 110. In other embodiments, the rivet terminal 500 may be inserted into the terminal hole 112 from outside the can 100, and the lower end of the rivet terminal may be compressed and brought into tight contact with the inside of the upper surface portion 110. The first gasket 130 may be interposed between the rivet terminal 500 and the terminal hole 112. The first gasket 130 may electrically insulate the rivet terminal 500 and the can 100 from each other and may seal between the rivet terminal 500 and the can 100. The rivet terminal 500 may be electrically connected to the two positive electrode plates 220a and 220b of the electrode assembly 200 via the positive electrode current collector plate 300.

The cap plate 600 may be a circular metal plate and may be coupled to the lower end of the can 100. The cap plate 600 may be coupled to the lower end of the can 100 in the state in which a second gasket 700 is interposed therebetween. Accordingly, the cap plate 600 may be prevented from being electrically connected to the can 100. In such an embodiment, the cap plate 600 has no electrical polarity (e.g., is electrically floating) because the cap plate is not electrically connected to the positive electrode or the negative electrode of the electrode assembly 200.

The cap plate 600 may be fixed by the crimping portion 150 in the state in which an edge of the cap plate 600 is seated on the bottom of the beading portion 140 of the can 100. The cap plate 600 may be seated on the beading portion 140 in the state in which the open bottom of the can 100 faces upward. The cap plate 600 may be seated on the bottom of the beading portion 140 of the can 100 in the state in which the second gasket 700 is interposed therebetween. Subsequently, the crimping portion 150 may be formed, and the crimping portion 150 may press the second gasket 700 such the cap plate 600 and the can 100 may be coupled to each other.

The second gasket 700 may be made of a resin material, such as polyethylene (PE), polypropylene (PP), or polyethylene terephthalate (PET). The second gasket 700 may press the can 100 and the cap plate 600 to seal therebetween.

The cap plate 600 may have a notch 610 such that it is configured to be opened (e.g., to burst or rupture) at a reference (or predetermined) pressure. If the internal pressure of the can 100 reaches the rupture pressure, the notch 610 may rupture to allow the excess internal pressure in the can 100 to be released.

As is apparent from the above description, according to embodiments of the present disclosure, a plurality of stacks may be wound to form an electrode assembly, and therefore, the length of each electrode plate of a large-diameter electrode assembly may be reduced. Consequently, the winding speed may be increased and/or the required windings may be reduced, and winding equipment, labor, and space may be reduced while increasing productivity.

The length of each electrode plate may be reduced, such that electrolyte impregnation may be improved.

Because the plurality of stacks is wound, the position of substrate tabs may be easily adjusted by pushing or pulling each positive electrode plate before winding the plurality of stacks such that the electrode tabs are easily gathered to one side after winding.

The above describes only some embodiments for implementing the present disclosure, and the present disclosure is not limited to the above embodiments. A person having ordinary skill in the art to which the present disclosure pertains will recognize the present disclosure to the extent that various modifications can be made without departing from the present disclosure as claimed in the following claims.

## Claims

1. A cylindrical secondary battery (1) comprising:
a cylindrically wound electrode assembly (200) comprising a plurality of positive electrode plates (220, 220a, 220b), a plurality of negative electrode plates (230, 230a, 230b), and a plurality of separators (240, 240a, 250, 250a) insulating the positive electrode plates (220, 220a, 220b) and the negative electrode plates (230, 230a, 230b) from each other;
a can (100) accommodating the electrode assembly (200); and
a cap plate (600) coupled to an open end of the can (100) and sealing the can (100).

2. The cylindrical secondary battery (1) as claimed in claim 1, wherein the electrode assembly (200) comprises a plurality of wound stacks (210, 210a, 210b).

3. The cylindrical secondary battery (1) as claimed in claim 2, wherein each of the stacks (210, 210a, 210b) comprises one positive electrode plate (220, 220a, 220b), one negative electrode plate (230, 230a, 230b), one first separator (240a, 240b) between the one positive electrode plate (220, 220a, 220b) and the one negative electrode plate (230, 230a, 230b), and one second separator (250, 250a, 250b) outside the one positive electrode plate (220, 220a, 220b) or the one negative electrode plate (230, 230a, 230b).

4. The cylindrical secondary battery (1) as claimed in claim 3, wherein the plurality of positive electrode plates (220, 220a, 220b) is coated with the same positive electrode active material or with different positive electrode active materials.

5. The cylindrical secondary battery (1) as claimed in claim 3 or **4,** wherein the plurality of negative electrode plates (230, 230a, 230b) is coated with the same negative electrode active material or with different negative electrode active materials.

6. The cylindrical secondary battery (1) as claimed in any of claims 3 to 5, wherein the positive electrode plates (220, 220a, 220b) of the plurality of positive electrode plates (220, 220a, 220b) have the same thickness.

7. The cylindrical secondary battery (1) as claimed in any of claims 3 to 5, wherein the positive electrode plates (220, 220a, 220b) of the plurality of positive electrode plates (220, 220a, 220b) have different thicknesses.

8. The cylindrical secondary battery (1) as claimed in any of claims 3 to 7, wherein the negative electrode plates (230, 230a, 230b) of the plurality of negative electrode plates (230, 230a, 230b) have the same thickness.

9. The cylindrical secondary battery (1) as claimed in any of claims 3 to 7, wherein the negative electrode plates (230, 230a, 230b) of the plurality of negative electrode plates (230, 230a, 230b) have different thicknesses.

10. The cylindrical secondary battery (1) as claimed in any of claims 2 to 9, wherein an outermost side of the wound electrode assembly (200) is one of the separators (240, 240a, 250, 250a).

11. The cylindrical secondary battery (1) as claimed in any of claims 2 to 9, wherein an outermost side of the wound electrode assembly (200) is the positive electrode plate (220, 220a, 220b) or the negative electrode plate (230, 230a, 230b).

12. The cylindrical secondary battery (1) as claimed in any of claims 1 to 11, further comprising a rivet terminal (500) electrically connected to the plurality of positive electrode plates (220, 220a, 220b), the rivet terminal (500) being insulated from the can (100),
wherein the can (100) is electrically connected to the plurality of negative electrode plates (230, 230a, 230b), and
wherein the cap plate (600) is insulated from the can (100).

13. The cylindrical secondary battery (1) as claimed in claim 12, wherein the can (100) has a circular upper surface portion (110) and a side surface portion (120) extending from the upper surface portion (110), and
wherein an inwardly recessed beading portion (140) is adjacent to an end of the side surface portion (120).

14. The cylindrical secondary battery (1) as claimed in claim 13, further comprising:
a negative electrode current collector plate (400) electrically connected to the plurality of negative electrode plates (230, 230a, 230b), the negative electrode current collector plate (400) being in contact with the beading portion (140); and
a positive electrode current collector plate (300) electrically connected to the plurality of positive electrode plates (220, 220a, 220b) and the rivet terminal (500).

15. The cylindrical secondary battery (1) as claimed in any of claims 1 to **14,**
wherein
the positive electrode plates (220, 220a, 220b) and/or the negative electrode plates (230, 230a, 230b) each comprise electrode substrate tabs (224a, 234a) on a longitudinal side thereof, wherein the distance between electrode substrate tabs (224a, 234a) and/or the size of electrode substrate tabs (224a, 234a) changes or decreases or monotonically decreases or strictly monotonically decreases along the longitudinal side,
or wherein
the positive electrode plates (220, 220a, 220b) and/or the negative electrode plates (230, 230a, 230b) each comprise a non-coated portion (2234) forming tabs on a longitudinal side thereof, wherein the distance between tabs and/or the size of tabs changes or decreases or monotonically decreases or strictly monotonically decreases along the longitudinal side,
and/or wherein
wherein the positive electrode plates (220, 220a, 220b) and/or the negative electrode plates (230, 230a, 230b) each comprise electrode tabs (2246, 2256) on a longitudinal side thereof, wherein the length of the electrode tabs (2246, 2256) changes or decreases or monotonically decreases or strictly monotonically decreases along the longitudinal side.
